# EUROPEAN PATENT APPLICATION

(11) **EP 4 102 452 A1**
(43) Date of publication of application: **14.12.2022**
(21) Application number: 20917699.9
(22) Date of filing: 07.10.2020
(51) Int. Cl.: G06T 7/00, G06T 7/292, H04N 7/18

(54) **RE-IDENTIFICATION DEVICE, RE-IDENTIFICATION PROGRAM, AND RE-IDENTIFICATION METHOD**

(30) Priority: 03.02.2020 JP 2020016444
(71) Applicant: KONICA MINOLTA, INC., Tokyo 100-7015 (JP)
(72) Inventor: SASAKI, Tatsuya, Tokyo 100-7015 (JP)
(74) Representative: Gille Hrabal Partnerschaftsgesellschaft mbB Patentanwälte
(86) International application number: PCT/JP2020/037961
(87) International publication number: WO 2021/157133

(57) **Abstract**

Provided is a re-identification device capable of improving re-identification accuracy of an object.

A re-identification device includes an acquisition unit that acquires captured images in which a shape of an object changes depending on positions of the object in image capturing regions of image capturing devices due to distortion characteristics of the image capturing devices, an object detection unit that detects object regions including the object from the captured images, a trajectory estimation unit that estimates a movement trajectory of the object regions in the captured images captured by each image capturing device based on a time-series change in the positions of the object regions, and a re-identification unit that estimates whether the objects included in the object regions respectively detected in the captured images respectively captured by the plurality of image capturing devices are same by using the object regions within specific ranges in the captured images, in which the object regions are defined to be optimized in a class estimation accuracy of the object, and a model trained when the specific ranges are defined, and estimates the movement trajectory of the object regions including each of the objects estimated to be same based on an estimation result as the movement trajectory of the same object.

## Description

### TECHNICAL FIELD

The present invention relates to a re-identification device, a re-identification program, and a re-identification method.

### BACKGROUND ART

Conventionally, for marketing purposes, an analysis on purchasing behavior of customers at a store has been conducted. For example, by analyzing the relationship between a movement trajectory of a customer in the store and the product purchased by the customer and the like, information such as what kind of product is purchased on what kind of moving line can be obtained. Reflecting such information in the assortment and layout of the products to be sold can promote the sales thereof, thus such information is important marketing information.

In relation to the technique of detecting a movement trajectory of an object, Patent Literature 1 describes a conventional technique of identifying an object from an image. Specifically, a uniqueness of each of a plurality of attributes of a subject of interest in an image is determined, and based on the relative orientation of the candidate subject in the image, a detectability of each of a plurality of attributes of a candidate subject is determined. Then, in order to improve the detectability of at least one attribute, a camera setting for observing the candidate subject is determined based on the determined uniqueness, and an image of the candidate subject is captured with the determined camera setting to determine a reliability that the candidate subject is the subject of interest.

### Citation List

### Patent Literatures

Patent Literature 1: JP 2016-72964 A

### SUMMARY OF INVENTION

### Technical Problem

In order to detect a movement trajectory of an object, a plurality of image capturing devices with no overlapping image capturing range is set, and re-identification (Re-Identification) is performed for determining an identity of objects by object collation between images captured by the plurality of image capturing devices. In the re-identification, unlike a general classification problem, the number of classes to be classified (object classes) is undefined, and images of each class cannot be obtained in advance. Therefore, feature vectors are extracted from the images of the object by a trained model which is obtained by using machine learning, and the images (the objects) in which a distance between the feature vectors in a feature space is equal to or less than a threshold are estimated to be a same class.

However, when the plurality of image capturing devices are set in a ceiling or the like of a store, a plurality of bird's-eye view images of the store are captured, and a movement trajectory of a customer is detected by re-identification, a shape of the customer changes depending on positions of the customer in the images due to distortion characteristics of lens of the image capturing devices. The changes in shape become more remarkable when the lens of the image capturing devices are wide-angle lens or the like. Then, there is a problem that a re-identification accuracy is lowered due to the changes in shape. The above prior art cannot solve such a problem.

The present invention has been made to solve the above problem. Specifically, an object of the present invention is to provide a re-identification device, a re-identification program, and a re-identification method capable of improving the re-identification accuracy of an object.

### Solution to Problem

The above problem to be solved by the present invention is solved by the following structures.
(1) A re-identification device including: an acquisition unit that acquires captured images in which a shape of an object changes depending on positions of the object in image capturing regions of image capturing devices due to distortion characteristics of lens of the image capturing devices; an object detection unit that detects object regions including the object in the acquired captured images; a trajectory estimation unit that estimates a movement trajectory of the object regions in the captured images captured by each of the image capturing devices based on a time-series change in positions of the object regions in the captured images; and a re-identification unit that estimates whether objects included in the object regions respectively detected in the captured images respectively captured by the plurality of image capturing devices in which the image capturing regions do not overlap are same by using the object regions within a range of specific ranges in the captured images, in which the object regions are defined to be optimized in an estimation accuracy of an object class, and by using a trained neural network model when the specific ranges are defined, and estimates the movement trajectory of the object regions including each of the objects estimated to be same based on an estimation result as the movement trajectory of the same object.
(2) The re-identification device according to (1) above, wherein a plurality of the specific ranges are defined for one image capturing devices, and the re-identification unit estimates whether objects included in the object regions respectively detected in the captured images respectively captured by the plurality of image capturing devices in which the image capturing regions do not overlap are the same, based on the object regions within a range of the specific ranges, using the respectively trained neural network model when the specific ranges are defined, and estimates the movement trajectory of the object regions including each of the objects estimated to be same based on an estimation result as the movement trajectory of the same object.
(3) The re-identification device according to (1) or (2) above, wherein the trajectory estimation unit estimates a movement trajectory of object regions in captured images captured by each image capturing device based on similarity of objects included in object regions detected in each of a plurality of time-series captured images and a time-series change in positions of object regions in captured images.
(4) The re-identification device according to any one of (1) to (3) above, further including: a training unit that causes, for each designated range set in the captured images, the neural network model to learn by using a combination of the object regions detected in the designated ranges and a correct label of an object class included in the object regions as teacher data; an evaluation unit that calculates an estimation accuracy of an object class by the trained neural network model; and a specific range definition unit that defines the specific ranges by determining the designated ranges when the estimation accuracy is maximized as the specific ranges.
(5) A re-identification program for causing a computer to execute: a step (a) of acquiring captured images in which a shape of an object changes depending on positions of the object in image capturing regions of image capturing devices due to distortion characteristics of lens of the image capturing devices; a step (b) of detecting object regions including an object in the acquired captured images; a step (c) of estimating a movement trajectory of the object regions in the captured images captured by each of the image capturing devices based on a time-series change in positions of the object regions in the captured images; and a step (d) of estimating whether objects included in the object regions respectively detected in the captured images respectively captured by the plurality of image capturing devices in which the image capturing regions do not overlap are the same by using the object regions within a range of specific ranges in the captured images, in which the object regions are defined to be optimized in an estimation accuracy of an object class, and by using a trained neural network model when the specific ranges are defined, and estimating the movement trajectory of the object regions including each of the objects estimated to be the same based on an estimation result as the movement trajectory of the same object.
(6) A re-identification method including: a step (a) of acquiring captured images in which a shape of the object changes depending on positions of objects in image capturing regions of image capturing devices due to distortion characteristics of lens of the image capturing devices; a step (b) of detecting object regions including an object in the acquired captured images; a step (c) of estimating a movement trajectory of the object regions in the captured images captured by each of the image capturing devices based on a time-series change in positions of the object regions in the captured images; and a step (d) of estimating whether objects included in the object regions respectively detected in the captured images respectively captured by the plurality of image capturing devices in which the image capturing regions do not overlap are same by using the object regions within a range of specific ranges in the captured images, in which the object regions are defined to be optimized in an estimation accuracy of an object class, and by using a trained neural network model when the specific ranges are defined, and estimating the movement trajectory of the object regions including each of the objects estimated to be same based on an estimation result as the movement trajectory of the same object.

### Effects of Invention

The movement trajectory of the object regions detected in captured images is estimated based on a time-series change of the object regions. Whether the objects included in the object regions respectively detected in the captured images respectively captured by the plurality of image capturing devices with no overlapping fields of view are same is estimated by using the object regions within the range of the specific ranges in the captured images, in which the object regions are defined to be optimized in the estimation accuracy of an object class, and by using the trained neural network model when the specific ranges are defined. And, the movement trajectory of the object regions including each of the objects estimated to be the same based on the estimation result are estimated as the movement trajectory of the same object. As a result, the re-identification accuracy of the object can be improved.

### BRIEF DESCRIPTION OF DRAWINGS

FIG. 1 is a diagram illustrating a schematic configuration of a re-identification system.
FIG. 2 is a block diagram of the re-identification system.
FIG. 3 is an explanatory figure illustrating a positional relationship between a camera and a customer.
FIG. 4 is a figure illustrating a captured image.
FIG. 5 is a functional block diagram during training of a control unit.
FIG. 6 is a figure illustrating an example of designated ranges.
FIG. 7 is a functional block diagram during evaluation of the control unit.
FIG. 8 is a functional block diagram during re-identification (inference) of the control unit.
FIG. 9 is a figure illustrating movement trajectories estimated for each of the cameras.
FIG. 10 is a flowchart illustrating an operation of the re-identification device during training.
FIG. 11 is a flowchart illustrating an operation of the re-identification device during evaluation.
FIG. 12 is a flowchart illustrating an operation of the re-identification device during evaluation.
FIG. 13 is an explanatory drawing for explaining a modification of an embodiment.

### DESCRIPTION OF EMBODIMENTS

Hereinafter, a re-identification device, a re-identification program, and a re-identification method according to embodiments of the present invention will be described with reference to the drawings. In the drawings, the same elements are denoted by the same reference numerals, and redundant description will be omitted. In addition, dimensional ratios in the drawings are exaggerated for convenience of description, and may be different from the actual ratios.

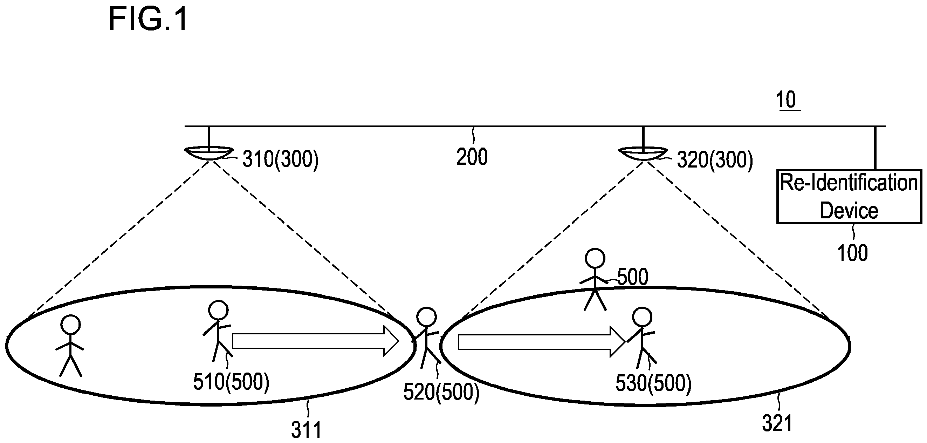

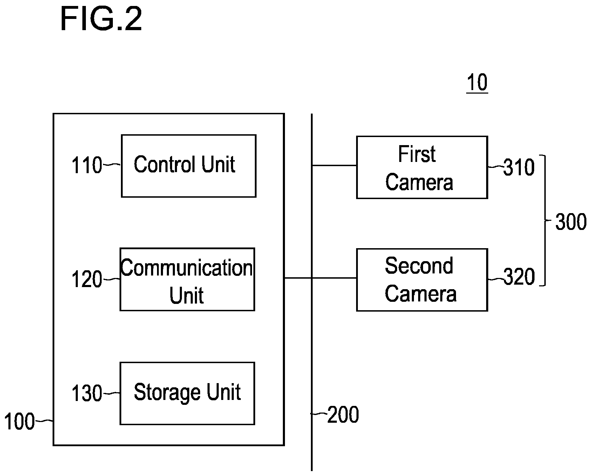

FIG. 1 is a diagram illustrating a schematic configuration of a re-identification system 10. FIG. 2 is a block diagram of the re-identification system 10.

The re-identification system 10 includes a re-identification device 100, a communication network 200, and a plurality of cameras 300. The re-identification device 100 and the plurality of cameras 300 are communicably connected to each other via the communication network 200. The number of the plurality of cameras 300 is not limited. Hereinafter, in order to simplify the description, the plurality of cameras will be described as that which includes two cameras, a first camera 310 and a second camera 320.

### (Camera 300)

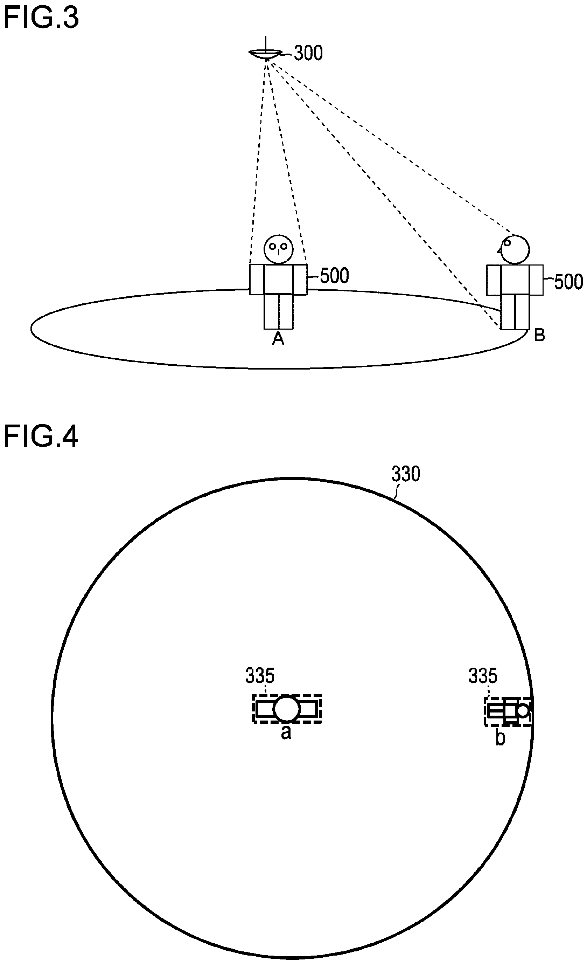

The first camera 310 and the second camera 320 (hereinafter referred to as "cameras 300" unless these are distinguished from each other) respectively capture images of a first image capturing region 311 and a second image capturing region 321, which are respective image capturing regions, to capture an object present in the image capturing region. Hereinafter, as an example, the object will be described as a customer 500 in a store. The cameras 300 capture an image of a range as wide as possible of the store or the like from a position where the customer 500 can be looked down, and outputs a captured image 330 (see FIG. 4), which corresponds to image data. The first camera 310 and the second camera are arranged, for example, on a ceiling, an upper portion of a wall, or the like of the store such that image capturing regions do not overlap with each other. Hereinafter, in order to simplify the description, it is assumed in the following explanation that the first camera 310 and the second camera are of the same type and are arranged on the ceiling of the store.

A captured image 510 includes a moving image. The cameras 300 can be wide-angle cameras. The wide-angle cameras are a camera capable of capturing the captured image 510 with a relatively wide angle of view, and captures the captured image 330 in which the shape (including the size) of an object changes depending on positions of the object in the image capturing regions due to distortion characteristics of the lens. In other words, the wide-angle cameras are a camera in which the magnitude of distortion changes corresponding to the position on the captured image 330. The wide-angle cameras include a fisheye lens camera. The cameras 300 may be a general camera other than the wide-angle cameras. Hereinafter, in order to simplify the description, the cameras 300 will be described as wide-angle cameras. The cameras 300 are near-infrared cameras, but visible light cameras may be used instead of the near-infrared cameras, or these cameras may be used in combination.

As illustrated in FIG. 1, the first camera 310 and the second camera 320 capture the first image capturing region 311 and the second image capturing region 321, respectively, so that the customers 500 present in the first image capturing region 311 and the second image capturing region 321 are captured by the first camera 310 and the second camera 320, respectively.

It is to say that the re-identification is the process of determining the identity of the objects by object collation between the images captured by the plurality of image capturing devices with no overlapping image capturing regions, and associating the objects having the identity with each other. Specifically, as illustrated in FIG. 1, a customer 510, a customer 520, and a customer 530 are the same person (the same class) when the customers 500 walk in the direction of the arrow. In order to detect behavior for each customer 500 in the store, it is necessary to determine that the customer 500 in a captured image 331 of the first camera 310 and the customer 500 in a captured image 332 of the second camera 320 are the same. When it is determined that the customer 500 in the captured image 331 of the first camera 310 and the customer 500 in the captured image 332 of the second camera 320 are the same, associating the two is referred to as re-identification (hereinafter simply referred to as "re-identification").

FIG. 3 is an explanatory figure illustrating a positional relationship between the cameras 300 and the customers 500. FIG. 4 is a figure illustrating the captured image 330. FIG. 4 illustrates the captured image 330 that is obtained by the wide-angle cameras. FIG. 4 also illustrates person rectangles 335 to be described later.

In FIG. 3, the customer 500 at a position A directly below the cameras 300 is captured at a position a of the captured image 330 in FIG. 4. Since the customer 500 at the position A is close to the cameras 300 in the captured image 330, the head and shoulders appear relatively large, and the arms and legs are hidden by the shoulders. The customer 500 at a position B appears small because it is far from the cameras 300, but the whole body appears. As described above, the shape of the customer 500 in the captured image 330 changes relatively significantly depending on the position of the customer 500 in the captured image 330 even in the same posture (for example, a standing posture).

### (Re-identification Device 100)

The re-identification device 100 includes a control unit 110, a communication unit 120, and a storage unit 130. These components are connected to each other via buses. The re-identification device 100 is composed of, for example, a computer terminal. The control unit 110 constitutes a training unit, an evaluation unit, and a specific region definition unit.

The control unit 110 includes a CPU (Central Processing Unit) and memories such as a RAM (Random Access Memory) and a ROM (Read Only Memory), and controls each unit of the re-identification device 100 and performs arithmetic processing according to a program. Details of the function of the control unit 110 will be described later.

The communication unit 120 is an interface circuit (for example, a LAN card or the like) for communicating with the plurality of cameras 300 and the like via the communication network 200.

The storage unit 130 includes an HDD (Hard Disc Drive), an SSD (Solid State Drive) or the like, and stores various programs and various kinds of data.

The function of the control unit 110 will be described.

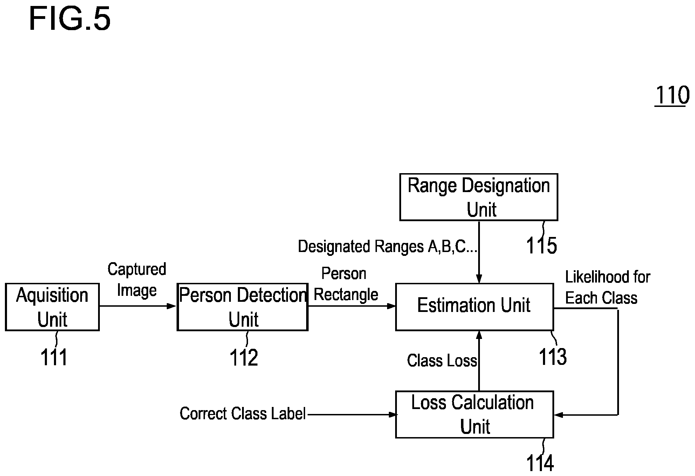

FIG. 5 is a functional block diagram during training of the control unit 110. The control unit 110 functions as an acquisition unit 111, a person detection unit 112, an estimation unit 113, a loss calculation unit 114, and a range designation unit 115 during training. The person detection unit 112 constitutes an object detection unit.

The acquisition unit 111 acquires the captured image 331 captured by the first camera 310 and the captured image 332 captured by the second camera 320 from the storage unit 130. The acquisition unit 111 may acquire the captured image 331 captured by the first camera 310 and the captured image 332 captured by the second camera 320 by directly receiving from the first camera 310 and the second camera 320, respectively.

The person detection unit 112 detects a region where an object (object) presents in the captured image 330 as a candidate rectangle, and calculates a reliability score for each category of the object included in the detected candidate rectangle. The person detection unit 112 detects a candidate region having the highest reliability score for the category of the person as the person rectangles 335 (see FIG. 4). The person rectangles 335 can be detected, for example, by a known method such as Faster R-CNN, Fast R-CNN, or R-CNN using a neural network (hereinafter referred to as "NN").

The person detection unit 112 can detect the person rectangles 335 from the captured image 330 by a NN model in which a dictionary (a parameter) for detecting the person rectangles 335 from the captured image 330 is reflected.

The person detection unit 112 can output the person rectangles 335 as a combination of the captured image 330 and coordinates of two opposing vertices of the person rectangles 335.

The estimation unit 113 includes a NN model for estimating a class of the customer included in the person rectangles 335 detected in the ranges (hereinafter referred to as a "designated ranges") in the captured image 330, which is designated by the range designation unit 115. The class is identification information for identifying the person (the customer). The estimation unit 113 trains the NN model using the person rectangles 335 and a correct class label set as the correct answer of the class of the customer included in the person rectangles 335 as the teacher data, thereby generating the NN model after being trained (hereinafter referred to as a "trained model"). Specifically, the estimation unit 113 estimates the class of the customer 500 included in the person rectangles 335 detected in the designated ranges by the NN model. The estimation unit 113 can estimate the class of the customer included in the person rectangles 335 by outputting the likelihood for each class. Then, the estimation unit 113 generates the trained model by training the NN model with back propagation so as to reduce the class loss calculated by the loss calculation unit 114 based on the estimation result of the class of the customer 500 included in the person rectangles 335 by the NN model and the correct class label.

The loss calculation unit 114 calculates the class loss based on the estimation result of the class of the customer 500 included in the person rectangles 335 estimated by the estimation unit 113 and the correct class label. Specifically, the loss calculation unit 114 can calculate the class loss by subtracting from 1 the likelihood of the class for the correct class label, which is estimated by the estimation unit 113.

The range designation unit 115 designates a range in which the person rectangles 335 used for re-identification are detected as designated ranges among the person rectangles 335 detected from the entire range of the captured image 330 by the person detection unit 112.

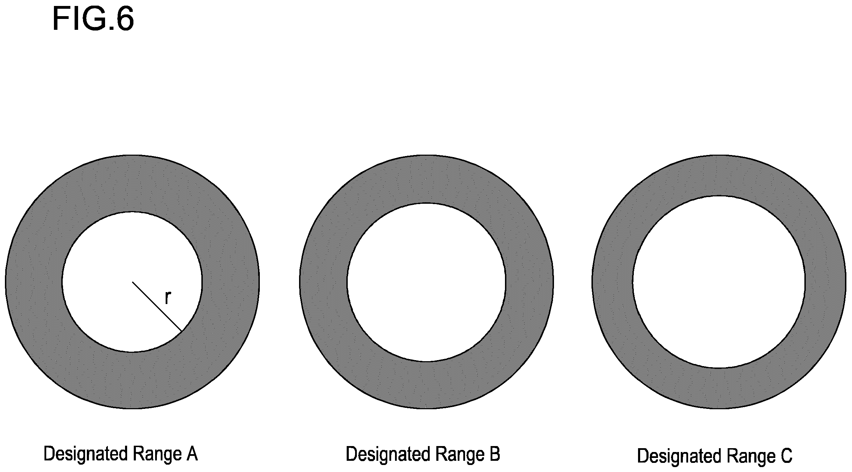

FIG. 6 is a figure illustrating an example of designated ranges.

In the example of FIG. 6, a designated range A, a designated range B, and a designated range C are each illustrated in gray. The designated ranges can be the designated range A, the designated range B, and the designated range C as a range excluding a range of a radius distance r from the center of the captured image 330, with the radius distance r from the center as a variable.

The range designation unit 115 sequentially designates a plurality of designated ranges. In this way, the estimation unit 113 generates the trained model for each designated range.

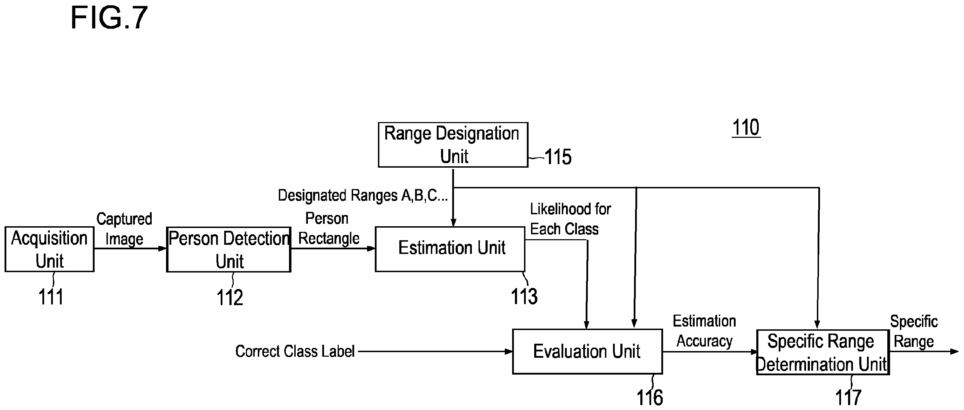

FIG. 7 is a functional block diagram during evaluation of the control unit 110. The control unit 110 functions as the acquisition unit 111, the person detection unit 112, the estimation unit 113, the range designation unit 115, an evaluation unit 116, and a specific range determination unit 117 during evaluation.

Since the functions of the acquisition unit 111 and the person detection unit 112 are similar to those described in FIG. 5, the description thereof will be omitted.

The range designation unit 115 sequentially designates designated ranges.

The estimation unit 113 estimates the class of the customer included in the person rectangles 335 detected in the designated ranges by the trained model generated for each designated range. Specifically, the estimation unit 113 can estimate the class of the customer included in the person rectangles 335 by outputting the likelihood for each class.

The evaluation unit 116 calculates the estimation accuracy of the class for each designated range based on the estimation result of the class of the customer 500 included in the person rectangles 335 estimated by the estimation unit 113 and the correct class label. In this way, the estimation accuracy of the class is evaluated for each designated range. The estimation accuracy of the class can be a reciprocal of a value obtained by subtracting from 1 the likelihood of the class of the correct class label, which is estimated by the estimation unit 113. Note that, specifically, the estimation accuracy of the class for each designated range can be obtained by averaging the estimation accuracy of the class calculated for each person rectangle 335 using a relatively large number of person rectangles 335 for each designated range.

The specific range determination unit 117 determines (defines) the designated ranges when the estimation accuracy of the class is the highest as specific ranges. The specific ranges are associated with the trained model (hereinafter also referred to as a "specific model") that is trained based on the person rectangles 335 within the specific ranges when the specific range is determined, and stored in the storage unit 130.

Note that the specific ranges may be determined by optimization calculation with Bayesian optimization using the above-described radius distance r as a variable and the estimation accuracy of the class by the evaluation unit 116 as a loss function.

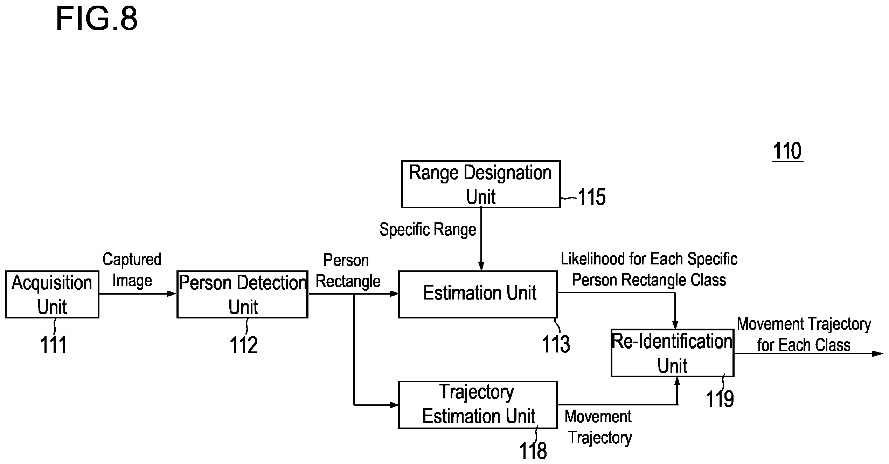

FIG. 8 is a functional block diagram during the re-identification (an inference) of the control unit 110. The control unit 110 functions as the acquisition unit 111, the person detection unit 112, the estimation unit 113, the range designation unit 115, a trajectory estimation unit 118, and a re-identification unit 119 during re-identification.

Since the functions of the acquisition unit 111 and the person detection unit 112 are similar to those described in FIG. 5, the description thereof will be omitted.

The range designation unit 115 designates the specific ranges.

The estimation unit 113 estimates the class of the customer included in the person rectangles 335 (hereinafter also referred to as "specific person rectangles") detected in the specific ranges by the specific model. Specifically, the estimation unit 113 can estimate the class of the customer included in the specific person rectangles by outputting the likelihood for each class.

The trajectory estimation unit 118 estimates a movement trajectory of the person rectangles 335 (hereinafter also simply referred to as a "movement trajectory") in the captured images 330 for each of the cameras 300. The movement trajectory is estimated for each of the cameras 300 based on the time-series change in the positions of the person rectangles 335 detected from the entire range of the captured images 330 by the person detection unit 112 and the similarity of the customer included in the person rectangles 335 detected in each of the plurality of captured images 330 in the time series. The movement trajectory may be estimated for each of the cameras 300 based on only the time-series change in the positions of the person rectangles 335 detected from the entire range of the captured images 330 by the person detection unit 112. The movement trajectory can be estimated by DeepSORT, which is a known tracking algorithm included in MTSCT (Multi Target Single Camera Tracking), which is a genre of tracking. The movement trajectory may be estimated by a known tracking algorithm other than DeepSORT. The MTSCT performs processing of repeating estimation of where an object detected in a time-series frame of a captured image of a single camera is located in a next time-series frame. In estimating where the object to be tracked has moved from the time-series frame T in the time-series frame T + 1, the MTSCT performs (1) similarity comparison between candidate objects by the feature vector, and additionally (2) movement position estimation of the object using the Kalman filter or the like.

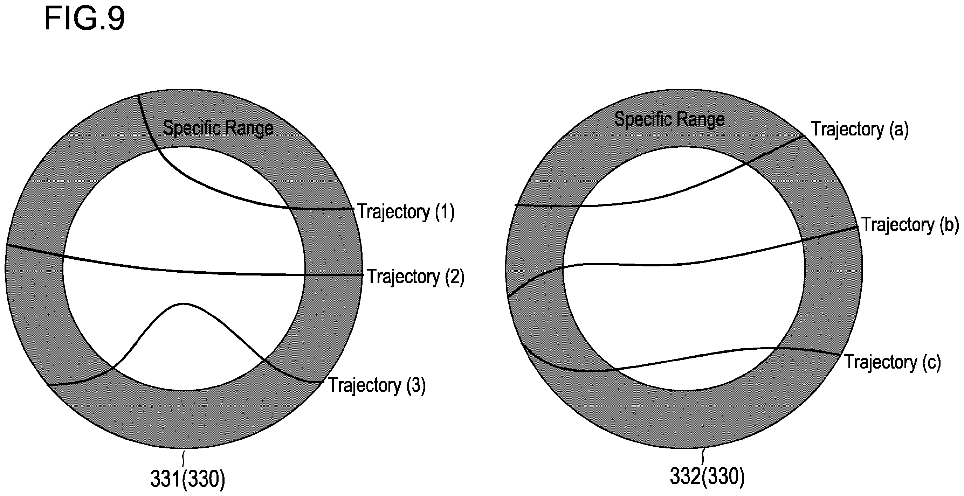

FIG. 9 is a figure illustrating movement trajectories estimated for each of the cameras 300. In the example of FIG. 9, the movement trajectories estimated in a first captured image 331 by the first camera 310 are illustrated as trajectories (1) to (3). Further, the movement trajectories estimated in a second captured image 332 by the second camera 320 are illustrated as trajectories (a) to (c). The specific ranges are illustrated in gray in FIG. 9. As described below, the re-identification is performed by associating each of the trajectories (1) to (3) with any one of the trajectories (a) to (c).

The re-identification unit 119 estimates whether the customers 500 respectively included in the specific person rectangles respectively detected within the specific ranges in the first captured image 331 and the second captured image 332 are the same based on whether the classes of the customers respectively estimated by the estimation unit 113 (the specific model) are the same. The re-identification unit 119 performs association by estimating the movement trajectory of the person rectangles 335 including each of the customers estimated to be the same as the movement trajectory of the same customer. In this way, re-identification is performed. In the example of FIG. 9, the trajectory (1) and the trajectory (a), the trajectory (2) and the trajectory (c), and the trajectory (3) and the trajectory (b) are the movement trajectories of the same customer, respectively. Therefore, in the re-identification, the trajectory (1) and the trajectory (a), the trajectory (2) and the trajectory (c), and the trajectory (3) and the trajectory (b) are associated as the movement trajectory of the same customer, respectively.

The operation of the re-identification device 100 will be described.

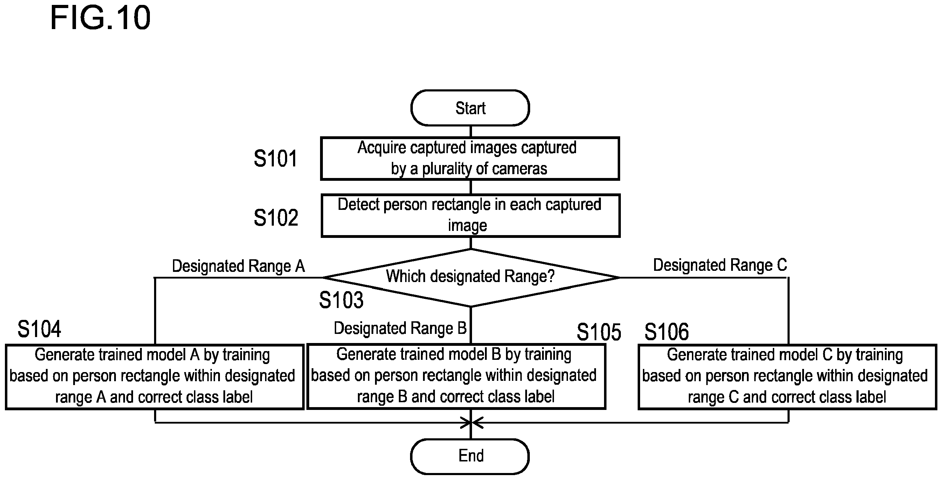

FIG. 10 is a flowchart illustrating an operation of the re-identification device 100 during training. This flowchart is executed by the control unit 110 according to the program. Note that, in order to simplify the description, the designated ranges will be described as three: the designated range A, the designated range B, and the designated range C.

The control unit 110 acquires the captured images 330 captured by the plurality of cameras 300 (S101). Specifically, the control unit 110 acquires the first captured image 331 and the second captured image 332.

The control unit 110 detects the person rectangles 335 in the first captured image 331 and the second captured image 332 respectively (S102).

The control unit 110 determines the designated ranges (S103). Specifically, the control unit 110 determines whether the designated ranges are any one of the designated range A, the designated range B, and the designated range C.

When determining that a target range is the designated range A, the control unit 110 generates a trained model A by training based on the person rectangles 335 within the designated range A and the correct class label set in the person rectangles 335 (S104). When determining that the target range is the designated range B, the control unit 110 generates a trained model B by training based on the person rectangles 335 within the designated range B and the correct class label set in the person rectangles 335 (S105). When determining that the target range is the designated range C, the control unit 110 generates a trained model C by training based on the person rectangles 335 within the designated range C and the correct class label set in the person rectangles 335 (S105).

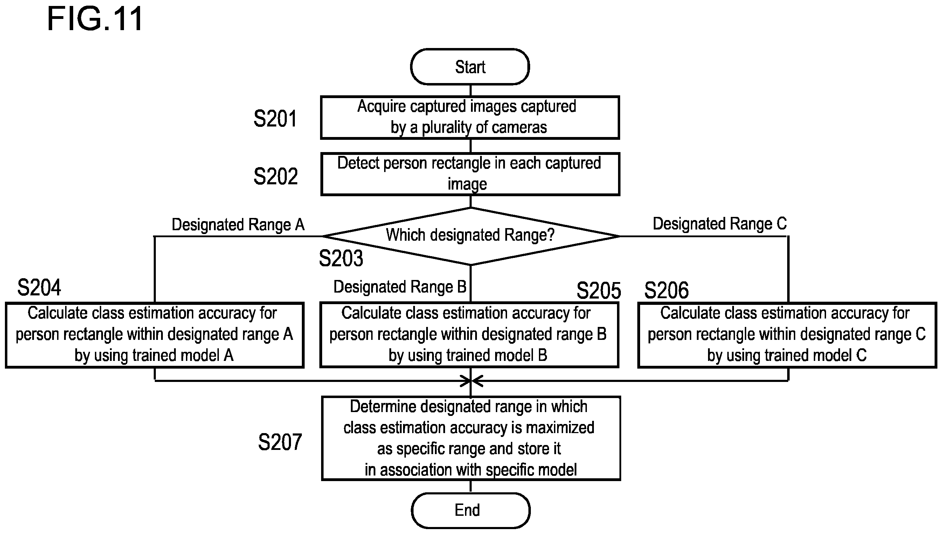

FIG. 11 is a flowchart illustrating an operation of the re-identification device 100 during evaluation. This flowchart is executed by the control unit 110 according to the program.

The control unit 110 acquires the captured images 330 captured by the cameras 300 (S201). The captured images acquired in step S201 may be the first captured image 331 and the second captured image 332, but may be another captured image 330. Hereinafter, in order to simplify the description, the captured images acquired in step S201 will be described as the first captured image 331 and the second captured image 332.

The control unit 110 detects the person rectangles 335 in the first captured image 331 and the second captured image 332 respectively (S202).

The control unit 110 determines the designated ranges (S203). Specifically, the control unit 110 determines whether the designated ranges are any one of the designated range A, the designated range B, and the designated range C.

When determining that the target range is the designated range A, the control unit 110 calculates the estimation accuracy of the class for the person rectangles 335 within the designated range A using the trained model A (S204). When determining that the target range is the designated range B, the control unit 110 calculates the estimation accuracy of the class for the person rectangles 335 within the designated range B using the trained model B (S205). When determining that the target range is the designated range C, the control unit 110 calculates the estimation accuracy of the class for the person rectangles 335 within the designated range C using the trained model C (S206).

The control unit 110 determines the designated range in which the estimation accuracy of the class is maximized as the specific ranges, and stores the specified range in the storage unit 130 in association with the specific model (S207).

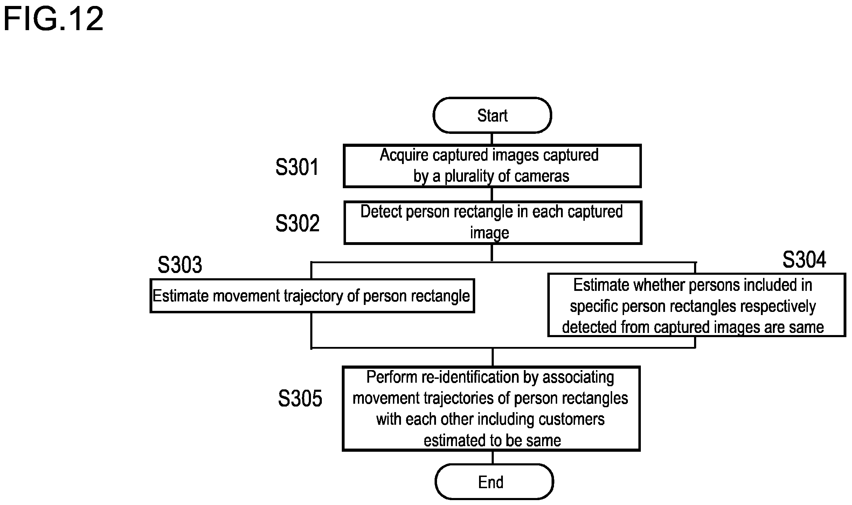

FIG. 12 is a flowchart illustrating an operation of the re-identification device 100 during evaluation. This flowchart is executed by the control unit 110 according to the program.

The control unit 110 acquires the captured images 330 captured by the plurality of cameras 300 (S301). Specifically, the control unit 110 acquires the first captured image 331 and the second captured image 332.

The control unit 110 detects the person rectangles 335 in the first captured image 331 and the second captured image 332, respectively (S302).

The control unit 110 estimates the movement trajectory of the person rectangles 335 (S303). Further, the control unit 110 estimates whether the customers included in the specific person rectangles respectively detected from the first captured image 331 and the second captured image 332 are the same (S304). Steps S303 and S304 can be executed in parallel. Steps S303 and S304 may be executed before and after in terms of time.

The control unit 110 performs re-identification by associating the movement trajectories of the person rectangles 335 with each other including the customers estimated to be the same in step S304 (S305).

### (Modification)

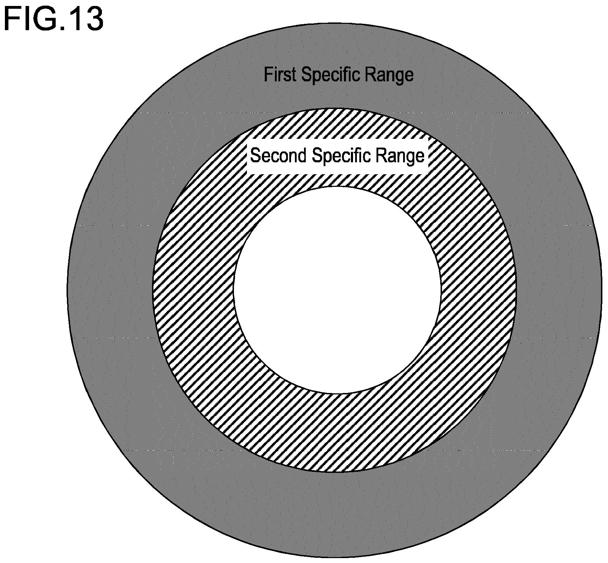

FIG. 13 is an explanatory drawing for explaining a modification of an embodiment. In the modification, a plurality of specific ranges is defined for one captured image 330. In the example of FIG. 12, a first specific range and a second specific range are defined. Different specific models are generated by training for and associated with the first specific range and the second specific range. As a result, the re-identification accuracy can be improved even when the mode of change in the shape of the customer in the captured image 330 is relatively significantly different between the first specific range and the second specific range.

The embodiment has the following effects.

The movement trajectory of the object regions detected in captured images is estimated based on a time-series change of the object regions. Whether the objects included in the object regions respectively detected in the captured images respectively captured by the plurality of image capturing devices with no overlapping fields of view are the same is estimated by using the object regions within the range of the specific ranges in the captured images, in which the object regions are defined to be optimized in the estimation accuracy of an object class, and by using the NN model trained when the specific ranges are defined. And, the movement trajectory of the object regions including each of the objects estimated to be the same based on the estimation result are estimated as the movement trajectory of the same object. As a result, the re-identification accuracy of the object can be improved.

Additionally, a plurality of the specific ranges are defined for one image capturing device, similarity between the objects included in the object regions respectively detected in the captured images respectively captured by the plurality of image capturing devices with no overlapping image capturing regions is estimated based on the object regions within the range of the specific ranges by using the respectively trained NN model when the specific ranges are defined, and the movement trajectory of the object area including each of the objects estimated to be same based on the estimation result is estimated as the movement trajectory of the same object. As a result, the re-identification accuracy of the object can be further improved.

Additionally, the movement trajectory of the object regions in the captured images by each image capturing device is estimated based on the similarity of the objects included in the object regions detected in each of the plurality of captured images in the time series and the time-series change in the positions of the object regions in the captured images. As a result, the estimation accuracy of the movement trajectory can be improved.

Additionally, a training unit that causes the neural network model to learn by using a combination of the object regions detected in the target region and a correct label of an object class included in the object regions as the teacher data for each target region set in the captured images; an evaluation unit that calculates the estimation accuracy of an object class by the trained neural network model; and a specific range definition unit that defines the specific ranges by determining the target region when the estimation accuracy is maximized as the specific ranges are provided. As a result, the re-identification accuracy of the object can be improved more easily and efficiently.

The main configuration of the re-identification device, the re-identification program, and the re-identification method described above has been described in describing the features of the above-described embodiments, and the present invention is not limited to the above-described configuration, and various modifications can be made within the scope of claims. In addition, the configuration included in a general re-identification system is not excluded.

For example, in the above-described flowchart, some steps may be omitted, and other steps may be added. Further, a part of each step may be executed simultaneously, or one step may be divided into a plurality of steps and executed.

Although the above-described embodiment has been described as re-identification for the customer, the present invention can also be applied to the re-identification of a person other than the customer, an animal, or the like.

Additionally, in the above-described embodiment, the specific ranges in which the estimation accuracy of the class is the highest are ranges not including the center of the captured images. However, as a result of evaluating the estimation accuracy of the class, a range including the center of the captured images can be the specific range.

In addition, means and methods for performing various processing in the above-described image processing system can be realized by either a dedicated hardware circuit or a programmed computer. The above program may be provided, for example, by a computer-readable recording medium such as a USB memory or a DVD (Digital Versatile Disc)-ROM, or may be provided online via a network such as the Internet. In this case, the program recorded on the computer-readable recording medium is usually transferred to and stored in a storage unit such as a hard disk. In addition, the above program may be provided as a single application software, or may be incorporated into the software of a device such as a detection unit thereof as a function.

The present application is based on Japanese Patent Application (Japanese Patent Application No. 2020-16444) filed on February 3, 2020, the disclosure of which is incorporated herein by reference as a whole.

## Claims

1. A re-identification device comprising:
an acquisition unit that acquires captured images in which a shape of an object changes depending on positions of the object in image capturing regions of image capturing devices due to distortion characteristics of lens of the image capturing devices;
an object detection unit that detects object regions including the object in the acquired captured images;
a trajectory estimation unit that estimates a movement trajectory of the object regions in the captured images captured by each of the image capturing devices based on a time-series change in positions of the object regions in the captured images; and
a re-identification unit that estimates whether objects included in the object regions respectively detected in the captured images respectively captured by the plurality of image capturing devices in which the image capturing regions do not overlap are same by using the object regions within a range of specific ranges in the captured images, in which the object regions are defined to be optimized in an estimation accuracy of an object class, and by using a trained neural network model when the specific ranges are defined, and estimates the movement trajectory of the object regions including each of the objects estimated to be same based on an estimation result as the movement trajectory of the same object.

2. The re-identification device according to claim 1, wherein a plurality of the specific ranges are defined for one image capturing device, and
the re-identification unit estimates whether objects included in the object regions respectively detected in the captured images respectively captured by the plurality of image capturing devices in which the image capturing regions do not overlap are the same, based on the object regions within a range of the specific ranges, using the respectively trained neural network model when the specific ranges are defined, and estimates the movement trajectory of the object regions including each of the objects estimated to be same based on an estimation result as the movement trajectory of the same object.

3. The re-identification device according to claim 1 or 2, wherein the trajectory estimation unit estimates a movement trajectory of object regions in captured images captured by each image capturing device based on similarity of objects included in object regions detected in each of a plurality of time-series captured images and a time-series change in positions of object regions in captured images.

4. The re-identification device according to any one of claims 1 to 3, further comprising:
a training unit that causes, for each designated range set in the captured images, the neural network model to learn by using a combination of the object regions detected in the designated ranges and a correct label of an object class included in the object regions as teacher data;
an evaluation unit that calculates an estimation accuracy of an object class by the trained neural network model; and
a specific range definition unit that defines the specific ranges by determining the designated ranges when the estimation accuracy is maximized as the specific ranges.

5. A re-identification program for causing a computer to execute:
a step (a) of acquiring captured images in which a shape of an object changes depending on positions of the object in image capturing regions of image capturing devices due to distortion characteristics of lens of the image capturing devices;
a step (b) of detecting object regions including an object in the acquired captured images;
a step (c) of estimating a movement trajectory of the object regions in the captured images captured by each of the image capturing devices based on a time-series change in positions of the object regions in the captured images; and
a step (d) of estimating whether objects included in the object regions respectively detected in the captured images respectively captured by the plurality of image capturing devices in which the image capturing regions do not overlap are same by using the object regions within a range of specific ranges in the captured images, in which the object regions are defined to be optimized in an estimation accuracy of an object class, and by using a trained neural network model when the specific ranges are defined, and estimating the movement trajectory of the object regions including each of the objects estimated to be same based on an estimation result as the movement trajectory of the same object.

6. A re-identification method comprising:
a step (a) of acquiring captured images in which a shape of an object changes depending on positions of the object in image capturing regions of image capturing devices due to distortion characteristics of lens of the image capturing devices;
a step (b) of detecting object regions including an object in the acquired captured images;
a step (c) of estimating a movement trajectory of the object regions in the captured images captured by each of the image capturing devices based on a time-series change in positions of the object regions in the captured images; and
a step (d) of estimating whether objects included in the object regions respectively detected in the captured images respectively captured by the plurality of image capturing devices in which the image capturing regions do not overlap are same by using the object regions within a range of specific ranges in the captured images, in which the object regions are defined to be optimized in an estimation accuracy of an object class, and by using a trained neural network model when the specific ranges are defined, and estimating the movement trajectory of the object regions including each of the objects estimated to be same based on an estimation result as the movement trajectory of the same object.
